# EUROPEAN PATENT SPECIFICATION

(11) **EP 4 324 586 B1**
(45) Date of publication and mention of the grant of the patent: **05.11.2025**
(21) Application number: 23190724.7
(22) Date of filing: 10.08.2023
(51) Int. Cl.: B23K 20/10, B29C 65/08

(54) **SONICATION WELDING SYSTEM**
ULTRASCHALLSCHWEISSSYSTEM
SYSTÈME DE SOUDAGE PAR SONICATION

(30) Priority: 17.08.2022 IT 202200017364
(43) Date of publication of application: 21.02.2024
(73) Proprietor: V-Tech S.r.l.s., 25121 Brescia (IT)
(72) Inventor: ZACCHÈ, Vanni, I-25121 Brescia (IT)
(74) Representative: Long, Giorgio

(56) References cited:
- WO-A1-98/22345
- US-B1- 6 190 296

## Description

The present invention relates to a sonication welding system, in particular a high-precision welding system.

Ultrasonic devices are widely used in many areas of industry, for both cleaning surfaces and welding or cutting materials, in particular plastic materials. In the latter case, the ultrasonic generator is coupled to a transducer coupled, in turn, to a sonotrode, which has a contact portion with the material to be welded or treated with shape adapted to the surface itself and to the operation type.

The heart of the ultrasonic device is the transducer or "converter," i.e., the device that converts an electrical signal into a mechanical pulse in order to produce a vibration with typical ultrasonic frequency either directly in a fluid medium, e.g., water, or on the sonotrode. By virtue of its structural characteristics, the latter amplifies the vibration, in some cases with the aid of a so-called booster, and transfers it to the medium or material to be treated.

The transformation of the electrical signal into mechanical force is achieved in the transducer using a piezoelectric material, which can polarize generating a potential difference when subjected to mechanical deformation (direct piezoelectricity) and conversely deform when subjected to a potential difference which causes a charge polarization therein (reverse piezoelectricity). The latter property is that utilized in ultrasonic transducers.

However, the welding assemblies allow high processing quality only if a constant spacing is kept between the energy emitter and the support underneath the material. When the material to be welded is a woven or non-woven fabric, i.e., a material of uneven thickness, the problem of keeping a constant spacing is particularly critical.

In order to be effective from the beginning of the process, the control of the aforesaid spacing must necessarily be adjusted by tracking, making use, in known equipment, of additional on-site measuring devices.

Such a solution is poorly efficient because of the high inherent vibrations in the process which, having a wide range of different frequencies, make harmonic filtering systems necessary. However, the assessment occurs only after a given period of time, required for the extrapolation of average values that allow only an estimate, however precise, of such a dimension.

In particular, two movements need to be implemented: a first major movement to move the sonotrode away from the contrast surface to replace the material to be welded, and a second fine-tuning movement to keep, as mentioned, the correct spacing between the energy emitter and the support underneath the material. The welders of the prior art comprise an Archimedes screw system for the vertical movement of the sonotrode, which, by means of a rotary actuator, is moved from the material release position to the operating position, or vice versa, and is then adjusted by the actuator itself to keep the aforesaid spacing constant. However, this system does not allow a really precise spacing adjustment, because all the loads are vertical and not compensated. Another solution is known from US6190296, which discloses an ultrasonic welding system in accordance with the preamble of claim 1.

Therefore, the problem underlying the present invention is to provide an ultrasonic welding system, which allows a precise, real-time control while keeping the spacing between the energy emitter and the support underneath the material at a constant value.

Such a problem is solved by an ultrasonic welding system as defined in the appended claims, the definitions of which form an integral part of the present description.

Further features and advantages of the present invention will become more apparent from the description of some embodiments thereof, given below by way of non-limiting indication, with reference to the following figures:
Figure 1 is a side view of the ultrasonic welding system of the invention;
Figure 2 is a perspective view of the system in figure 1 in a first operating condition;
Figure 3 is a perspective view of the system in figure 1 in a second operating configuration;
Figure 4 is a view of a detail of the system in figure 1;
Figure 5 is a view of a different detail of the welding system according to the invention;
Figure 6 is a perspective view of the welding system of the invention according to a first variant;
Figure 7 is a perspective view of the welding system of the invention according to a second variant;
Figure 8 is a perspective view of a further detail of the welding system of the invention;
Figure 9 is a perspective view of yet another detail of the welding system of the invention;
Figures 10A and 10B are perspective views of two different details of the system of the invention with the movement directions highlighted;
Figure 11 is a perspective section view of a tapered roller bearing usable in certain embodiments of the system of the invention.

With reference to the figures, reference numeral 1 indicates an ultrasonic welding system. The system 1 comprises a frame 2, on which at least one ultrasonic welding device 3 is movably mounted.

The ultrasonic welding device 3 comprises a sonicator device 4 and a anvil element 5 opposite to the sonicator device 4. The sonicator device 4 is movably supported on a member 6 for adjusting the position of the sonicator device 4.

In order to achieve a precise and real-time control while keeping the spacing between the sonicator device 4 and the anvil element 5 at a constant value, not only the adjustment of the position of the sonicator device 4 needs to be of the order of micrometers but the system as a whole, i.e., the frame 2 and the adjustment member 6, must have a high stiffness, this feature being important because, as described below, both comprise movable parts.

The frame 2 comprises a base 2a from which a dividing element 2b extends perpendicularly at about half its width. The dividing element 2b divides the base 2a into a first portion 7a and a second portion 7b.

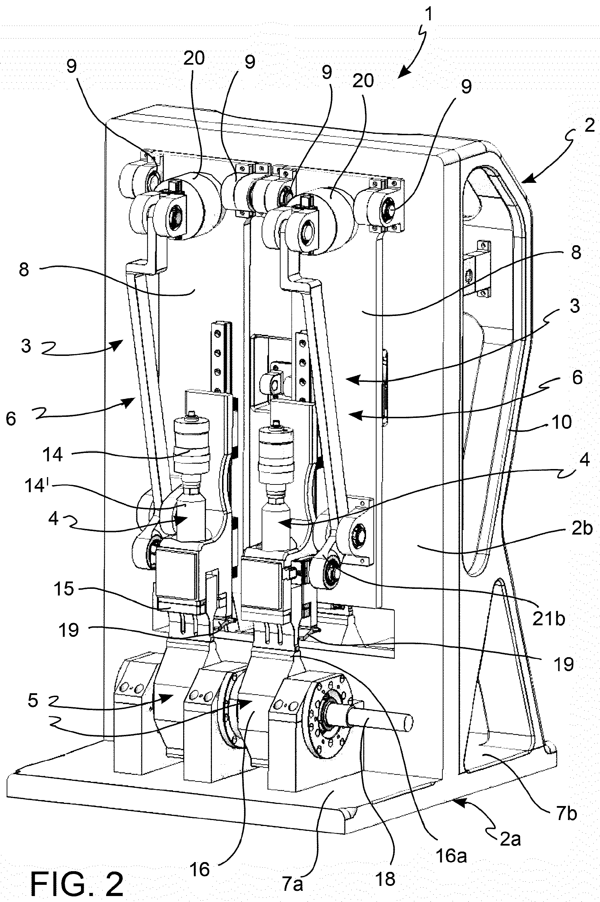

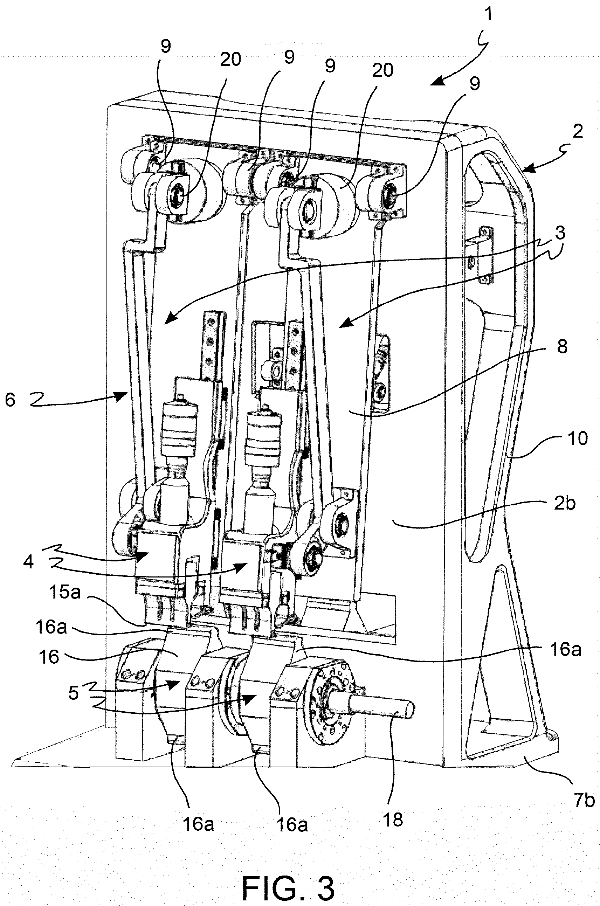

The dividing element 2b movably supports at least one tilting plate 8 in a position close to the upper end thereof, i.e., the end opposite to the base 2a. The at least one tilting plate 8 is hinged on hinges 9 and is movable between a first operating position, in which the tilting plate 8 is substantially parallel to the plane of the dividing element 2b (figure 2), and a second operating position, in which the tilting plate 8 protrudes distally above the first portion 7a of the base 2a (figure 3). The first operating position corresponds to the welding operating position, while the second operating position corresponds to the removal and/or replacement position of the material to be welded in the system 1.

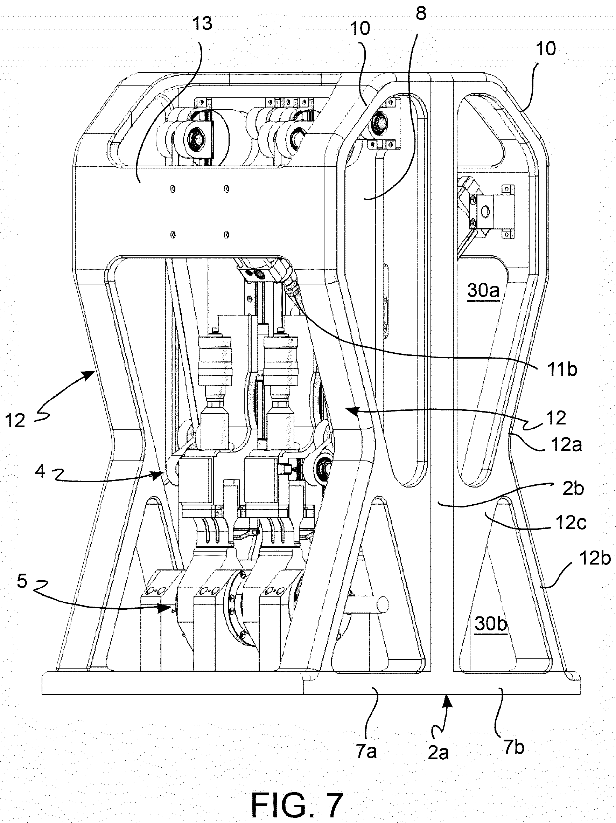

A support structure 10, which supports at least one linear actuator 11, e.g., a pneumatic or hydraulic piston, is placed on the second portion 7b of the base 2a. The linear actuator 11 is hinged, by means of the hinge 11a, on the support structure 10 and, by means of a hinge 11b (partially shown in figure 7) to the tilting plate 8 so as to achieve the movement of the latter between said first and second operating positions or vice versa.

In preferred embodiments, the hinges 11a and 11b are placed in positions such as to allow the axis X-X of the linear actuator 11 to take an angle of about 45° with respect to the plane of the dividing element 2b.

On the other hand, on the opposite face of the tilting plate 8, the adjustment member 6 on which the sonicator device 4 is mounted is movably supported and thus the sonicator device 4 protrudes above the first portion 7a of the base 2a.

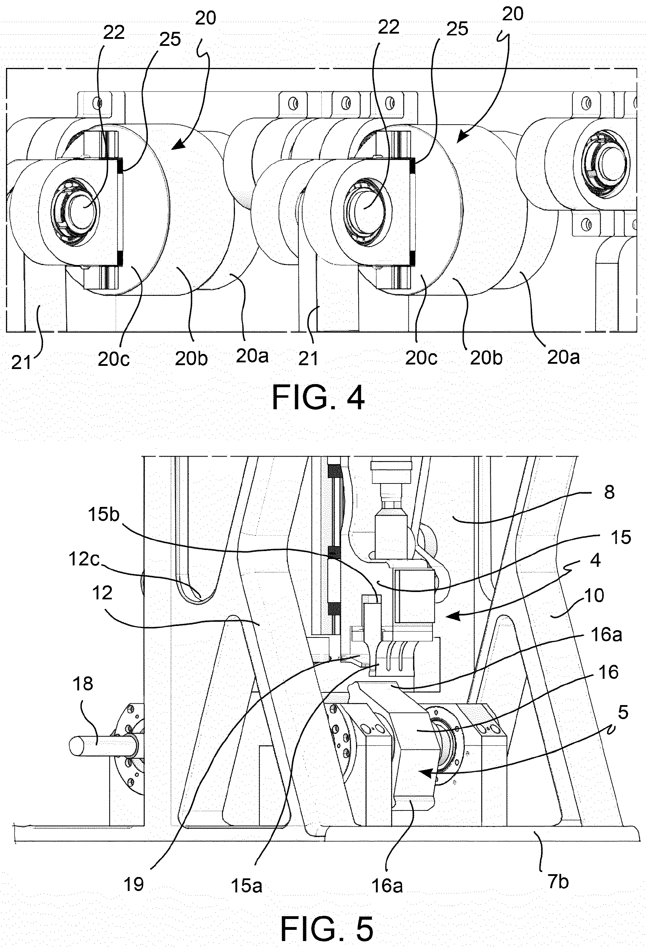

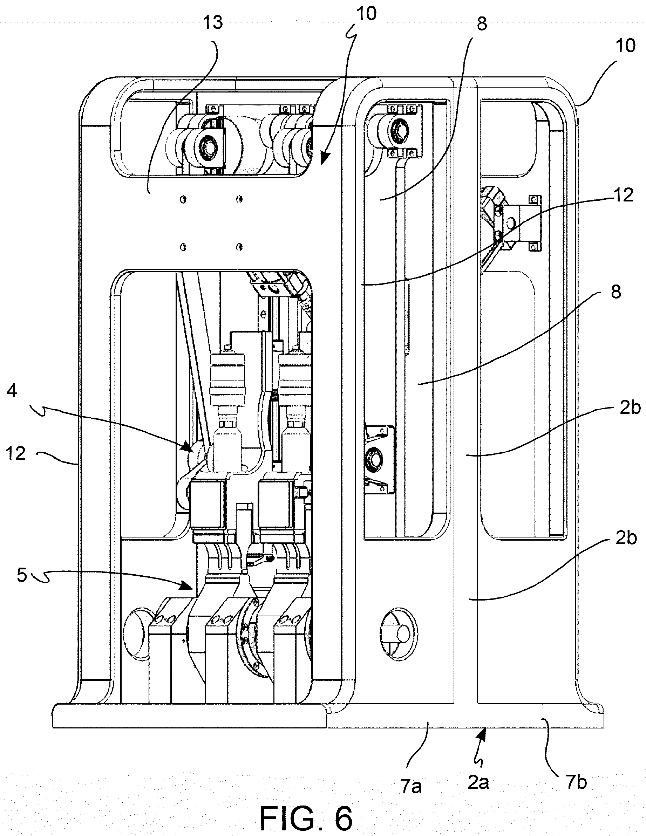

Figures 2 and 3 show embodiments in which there are two tilting plates 8 and thus two linear actuators 11 (not shown) and two ultrasonic welding devices 3. Instead, the embodiment in figure 5 shows a single plate 8. In different embodiments, shown in figures 6 and 7, the first and second portions 7a, 7b of the base 2a each comprise a support structure 10, placed facing both sides of the dividing element 8, so that respective ultrasonic welding devices 3 are placed on both sides of the dividing element 2b.

The frame 2 is characterized by high stiffness so as to minimize the vibrations that can result in adjustment inaccuracies. The support structure 10, shown in the two different embodiments in figures 6 and 7, comprises side stiffening flanks 12 joined by a connecting band 13, which also serves the purpose of forming a fixing surface for the linear actuator 11 by means of the hinge 11a.

The variant of the support structure 10 shown in figure 7 (also shown in figures 2, 3 and 5) is particularly preferred. In such an embodiment, the side stiffening flanks 12 have a lambda geometry, comprising an upper portion 12a and a lower portion 12b crossing each other to form an intersection portion 12c, which defines an upper slot 30a and a lower slot 30b. In a particularly preferred embodiment, the intersection of the lines at the intersection portion 12c is located approximately at the height from the base 2a of the center of gravity of the constraint of the sonicator device 4, i.e., for example, the tabs 15b at the nodal point of the sonotrode 15, as shown in figure 5.

In order to make the tilting plate 8 stiff when it is in the first operating position, the linear actuator 11 is hinged on the connecting band 13 keeping an angle of 45° with the vertical direction. The vertical component of the force produced by the cylinder cancels out the contribution of true weight (force of gravity) and imposes a preload on the bearings of the hinge constraint of the tilting plate 8 with the dividing element 2b.

Describing now the ultrasonic welding device 3, it comprises, as mentioned, a sonicator device 4 adjustably mounted to an adjustment member 6, and a anvil element 5.

The sonicator device 4 is of a known type and comprises a piezoelectric device 14, comprising an electrical signal transducer and a foil made of piezoelectric material, which produces a vibration with the typical ultrasound frequency and transfers it, by means of a so-called booster 14', to a sonotrode 15 ending with an operating end 15a intended to come in contact with the material to be welded.

The sonicator device 4 further comprises a cooling nozzle 19 which conveys cooling air in the direction of the operating end 15a of the sonotrode 15.

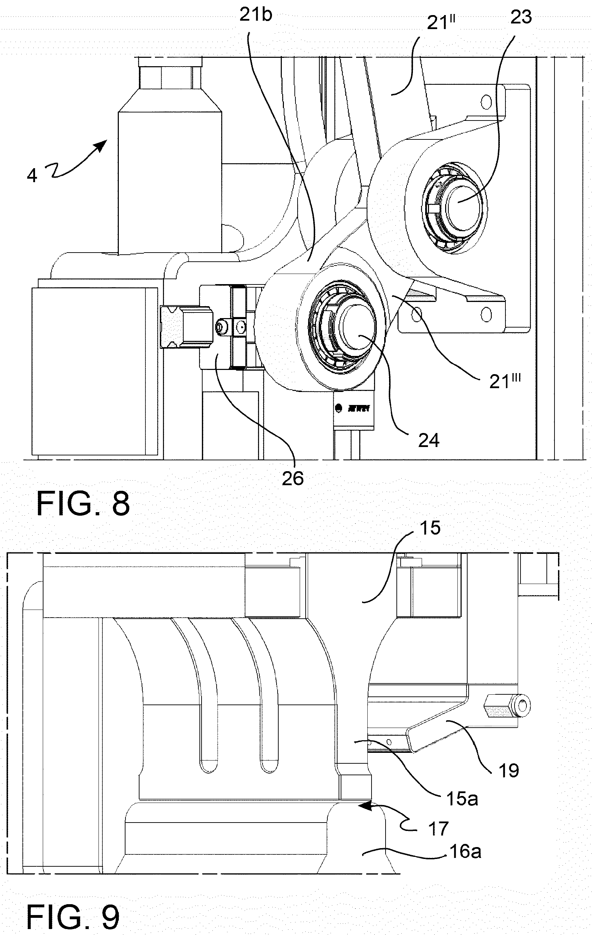

The anvil element 5 is mounted to the first portion 7a of the base 2a (or even to the second portion 7b, in the case of a sonication system on both sides of the dividing element 2b) and comprises a rotating roller 16 comprising, in diametrically opposite positions, one or more contrast ridges 16a, e.g., two contrast ridges (as shown in the figures), which, when aligned vertically with the operating end 15a of the sonotrode 15, create a spacing 17 (figure 9) in which the material to be welded flows and which forms the seat of the welding.

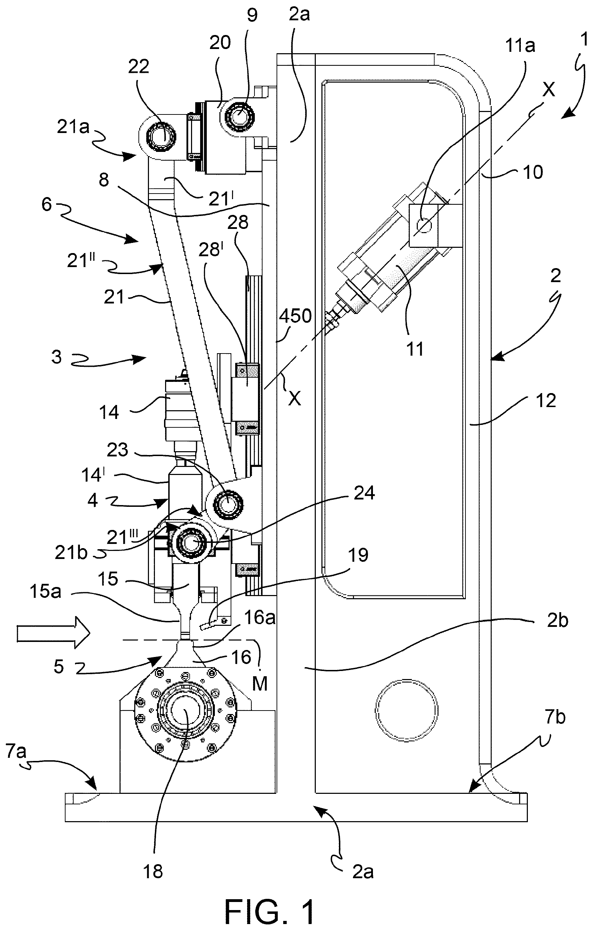

The rotating roller 16 is mounted to a shaft 18 set in rotation by an appropriate drive (not shown), so that the two contrast ridges 16a alternately come into alignment with the operating end 15a of the sonotrode 15, thus resulting in the weld spots of the material flowing therebetween (the material to be welded M is shown by a dotted line in figure 1 and flows in the direction indicated by arrow A). Figure 5 shows the rotating roller 16 in a position immediately before (or immediately after, according to the rotation direction) the alignment condition with the sonotrode 15.

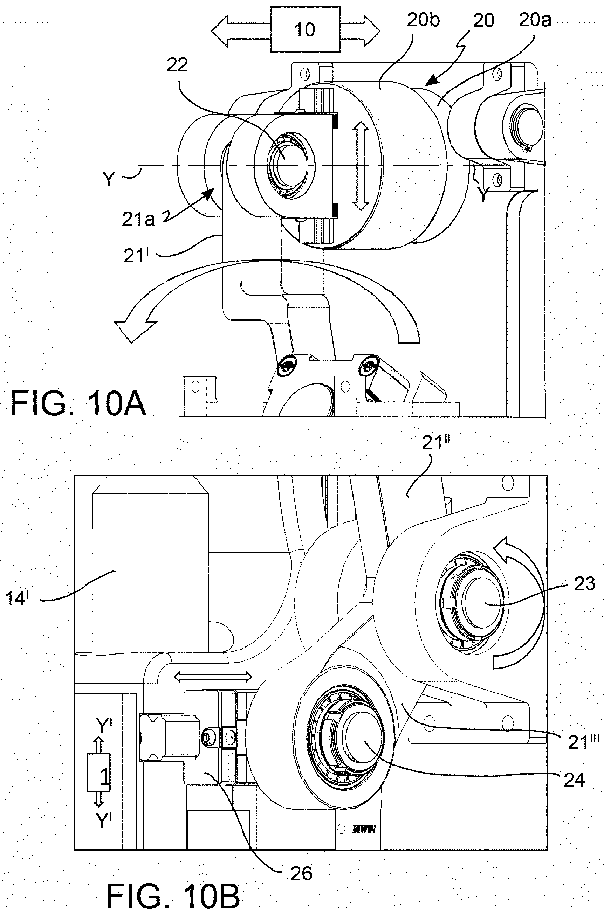

The sonicator device 4 is slidably mounted to a vertical guide 28 by means of a slide 28' (e.g., a linear roller guide) and is operatively coupled to the adjustment member 6 so as to adjust the spacing 17 between the operating end 15a and the contrast ridge 16a. For this purpose, the control member 6 comprises a linear actuator 20 and a transmission lever 21, which transforms the movement of the linear actuator 20 along a horizontal axis into a vertical movement of the sonicator device 4 (figures 10A and 10B). Obviously, if the material M were flowed vertically, the linear actuator 20 would be mounted with a vertical axis, and the sonicator device 4 would be adjusted along a horizontal axis. Therefore, in the present patent application, the term "horizontal" or "vertical" should be understood with respect to the base 2a, which can also be mounted in positions other than the position on a horizontal plane shown in the figures.

The linear actuator 20 is preferably a "voice coil" actuator. Such an actuator is an electromagnetic actuator in which the (axial) mechanical force generated by the output shaft is proportional to the current circulating in the electrical winding (and thus to the supply voltage). Inside the voice coil, a permanent magnet, integral with the electromagnet body, generates a magnetic field oriented toward the center of the core in the air gap. A drive shaft, integral with an electrical winding free to move axially in the air gap, forms the movable armature of the voice coil.

When the electric circuit is energized, the current circulating therein, in turn, generates a magnetic field which interacts with the field produced by the permanent magnet, and a force with an axial direction with respect to the body of the electromagnet is impressed on the movable armature and then mechanically transmitted through the shaft. The intensity and direction of the force are proportional to the intensity and direction of the current circulating in the electrical winding. Therefore, it is apparent that by driving the voice coil with a variable voltage, it is possible to modulate the current in the winding and thus the force expressed on the output shaft.

Moreover, the voice coil actuator acts as a sensor, which detects the force applied to the control member 6 (and thus to the material M) and sends it to a command and control unit (not shown) which, based on the reading of the applied force, adjusts the current supplied to the voice coil actuator so as to adjust the movement of the sonicator 15 and keep the spacing 17 constant. Such a reading-adjustment cycle is of the order of milliseconds, whereby the spacing 17 is adjusted in real-time. The command and control unit can be integrated into the system 1 of the invention or can be arranged externally.

The linear actuator 20 thus comprises a stationary body 20a, fixed to the tilting plate 8 on the side facing the sonication welding device 3, and a movable shaft 20b moving along a horizontal axis coincident with the axis of the linear actuator 20. The distal end 20c of the movable shaft 20b comprises a vertical high-precision guide 25 (e.g., a low-profile ball bearing guide), with which a first hinge 22 is movably associated.

A first end 21a of the transmission lever 21 is hinged to the first hinge 22. The transmission lever 21 comprises a connection portion 21' with the first hinge 22, which is L-shaped and comprises said first end 21a, and a V-shaped portion in which the first section 21", proximal to the connection portion 21', is longer than the second section 21". At the connection point between the first and second sections 21", 21", i.e., at the vertex of the V, the transmission lever 21 is hinged on a second hinge 23 fixed to tilting plate 8. The distal end of the second section 21", corresponding to a second end 21b of the transmission lever 21, is hinged on the sonicator device 4 by means of a third hinge 24 mounted to a high-precision horizontal guide 26 (e.g., a low-profile ball guide or a roller guide).

The first section 21" of the transmission lever 21, together with the connection portion 21", and the second section 21‴ of the transmission lever 21 form the arms of the lever, and the length thereof as well as the angle formed at the vertex of the V are preferably sized so that the adjustment member 6 carries out a reduction from 10 to 1 of the horizontal movement of the linear actuator 20 in the vertical movement of the sonicator device 4. The vertical guide 25 and the horizontal guide 26 allow such a movement to take place without the moving parts undergoing tensile stresses. This results in a micrometric adjustment of the spacing 17.

For example, the length ratio between the lever arms is 10:1 and the angle at the vertex of the V is of about 90°.

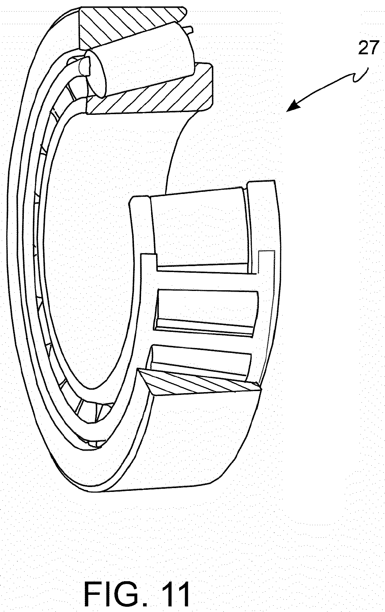

In order to minimize the vibrations and thus improve adjustment precision, the hinges 9, 22, 23, and 24 comprise tapered roller bearings 27, shown in figure 11.

From the above description, it is apparent that the invention has many advantages over the prior art.

The separation between the fine-tuning movement, carried out by the linear actuator 20 of the welding device 3, and the movement of the sonotrode 15 away from the anvil element 5 for the removal/replacement of the material to be welded, allows increasing the adjustment precision (by means of a dedicated actuator) and decreasing the time required for resuming welding after the interruption.

Moreover, the problem of system stiffness was solved by both the geometry of the support structure 10 and the arrangement of the linear actuator 11 which moves the tilting plate 8.

The adjustment system obtained with the arrangement of the linear actuator 20, in particular the voice coil actuator, in association with the control member 6 with kickdown lever allows maximizing the precision of adjustment of the spacing 17 between the sonotrode 15 and the anvil element 5 and keeping the spacing constant in real-time.

It is apparent that only some particular embodiments of the present invention have been described, to which those skilled in the art will be able to make all changes required for the adaptation thereof to particular applications, without departing from the scope of the appended claims.

## Claims

1. An ultrasonic welding system (1) comprising a frame (2) to which at least one ultrasonic welding device (3) is movably mounted, wherein the ultrasonic welding device (3) comprises a sonicator device (4), comprising a sonotrode (15), an anvil element (5) and a member (6) for adjusting the spacing (17) between said sonicator device (4) and said anvil element (5), wherein said adjustment member (6) comprises a linear actuator (20) operatively coupled to the sonicator device (4) by means of a lever transmission, **characterized in that** the sonicator device (4) is slidably mounted to a vertical guide (28) by means of a slide (28'), for example a linear roller guide, and is operatively coupled to the adjustment member (6) so as to be capable of adjusting the spacing (17) between said sonicator device (4) and said anvil element (5), wherein the adjustment member (6) comprises a linear actuator (20) and a transmission lever (21) which transforms the movement of the linear actuator (20) along a longitudinal axis (Y-Y) of the linear actuator (20) into a movement of the sonicator device (4) along an axis (Y'-Y') perpendicular to said longitudinal axis (Y-Y), wherein the transmission lever (21) comprises a connection portion (21') with a first hinge (22) and a V-shaped portion in which the first section (21"), proximal to the connection portion (21'), is longer than the second section (217‴), at the connection point between the first and second sections (21", 21‴), i.e., at the vertex of the V, the transmission lever (21) being hinged on a second hinge (23) fixed to the tilting plate (8), wherein the distal end of the second section (21‴) is hinged on the sonicator device (4) by means of a third hinge (24) mounted to a horizontal high-precision guide (26), for example a low-profile ball guide, and wherein the first hinge (22) is connected to the linear actuator (20) of the adjustment member (6) by means of a vertical high-precision guide (25), for example a low-profile ball guide.

2. The system (1) according to claim 1, wherein the frame (2) comprises a base (2a) from which a dividing element (2b), lying on a plane and dividing the base (2a) into a first portion (7a) and a second portion (7b), extends perpendicularly, wherein the dividing element (2b) movably supports, in a position proximal to one of the upper ends thereof, at least one tilting plate (8) movable between a first operating position, in which the tilting plate (8) is substantially parallel to the plane of the dividing element (2b), and a second operating position, in which the tilting plate (8) protrudes distally from the plane of the dividing element (2b), wherein the first operating position corresponds to the operating position for welding, whereas the second operating position corresponds to the position for removing and/or replacing the material to be welded in the system (1).

3. The system (1) according to claim 2, wherein a support structure (10) which supports at least one linear actuator (11) of the tilting plate (8) is placed on the base (2a), the linear actuator (11) being hinged, by means of a hinge (11a), on the support structure (10) and, by means of a hinge (11b), to the tilting plate (8) so as to obtain the movement of the latter between said first and said second operating positions, or vice versa.

4. The system (1) according to claim 3, wherein the hinges (11a, 11b) of the linear actuator (11) of the tilting plate (8) are placed in positions such as to allow the axis (X-X) of the linear actuator (11) take an angle of about 45° with respect to the plane of the dividing element (2b).

5. The system (1) according to claim 3 or 4, wherein the ultrasonic welding device (3) is mounted to the face of the tilting plate (8) opposite to that supporting said hinge (11b) of the linear actuator (11) of the tilting plate (8).

6. The system (1) according to any one of claims 3 to 5, wherein the support structure (10) comprises stiffening side flanks (12) joined by a connecting band (13) acting as a fixing surface for the linear actuator (11) of the tilting plate (8) by means of the hinge (11a).

7. The system (1) according to claim 6, wherein the stiffening side flanks (12) have a lambda geometry, comprising an upper portion (12a) and a lower portion (12b) crossing each other to form an intersection portion (12c) which defines an upper slot (30a) and a lower slot (30b), wherein the intersection of the lines at the intersection portion (12c) is preferably located approximately at the same height from the base (2a) as the center of gravity of the constraint of the sonicator device (4).

8. The system (1) according to any one of claims 1 to 7, wherein the sonicator device (4) comprises a piezoelectric device (14) connected to a sonotrode (15), preferably by means of a booster (14'), wherein the sonotrode (15) ends with an operating end (15a) intended to come into contact with the material to be welded; and wherein the anvil element (5) is mounted to the base (2a) and comprises a rotating roller (16) comprising, in diametrically opposite positions, two contrast ridges (16a) which create the spacing (17) forming the seat of the welding when alternately aligned vertically with the operating end (15a) of the sonotrode (15).

9. The system (1) according to any one of claims 1 to 8, wherein the linear actuator (20) of the adjustment member (6) is a voice coil actuator, also acting as a sensor detecting the force applied to the adjustment member (6) and sending it to a command and control unit which, based on the reading of the applied force, adjusts the current fed to the linear actuator (20) so as to adjust the movement of the sonicator (15) and keep the spacing (17) constant.

10. The system (1) according to any one of claims 1 to 9, wherein the arms of the transmission lever (21) and the angle between the first section (21") and the second section (21‴) are sized so that the adjustment member (6) carries out a reduction from 10 to 1 of the movement of the linear actuator (20) along the axis (Y-Y) in the movement of the sonicator device (4) along the axis (Y'-Y').

11. The system (1) according to any one of claims 1 to 10, wherein the first, second and third hinges (22, 23, 24) comprise tapered roller bearings (27).

## Patentansprüche

1. Ultraschallschweißsystem (1), umfassend einen Rahmen (2), an dem mindestens eine Ultraschallschweißvorrichtung (3) beweglich eingebaut wird, wobei die Ultraschallschweißvorrichtung (3) eine Sonikatorvorrichtung (4) umfasst, die ein Sonotrode (15), ein Amboss-Element (5) und ein Element (6) zur Einstellung des Abstands (17) zwischen der Sonikatorvorrichtung (4) und dem Amboss-Element (5) umfasst, wobei das Einstellungselement (6) einen Linearaktuator (20) umfasst, der operativ über eine Hebelgetriebe mit der Sonikatorvorrichtung (4) gekoppelt ist, **dadurch gekennzeichnet, dass** die Sonikatorvorrichtung (4) mittels eines Gleitelements (28'), beispielsweise einer linearen Rollführung, verschiebbar an einer vertikalen Führung (28) eingebaut wird und operativ mit dem Einstellungselement (6) gekoppelt ist, sodass sie in der Lage ist, den Abstand (17) zwischen der Sonikatorvorrichtung (4) und dem Amboss-Element (5) einzustellen, wobei das Einstellungselement (6) einen Linearaktuator (20) und einen Übertragungshebel (21) umfasst, der die Bewegung des Linearaktuators (20) entlang einer Längsachse (Y-Y) des Linearaktuators (20) in eine Bewegung der Sonikatorvorrichtung (4) entlang einer Achse (Y'-Y') umwandelt, die sich senkrecht zu der Längsachse (Y-Y) erstreckt, wobei der Übertragungshebel (21) einen Verbindungsabschnitt (21') mit einem ersten Gelenk (22) und einen V-förmigen Abschnitt umfasst, in dem der erste Abschnitt (21"), der proximal zu dem Verbindungsabschnitt (21') ist, länger als der zweite Abschnitt (21‴) ist, wobei an dem Verbindungspunkt zwischen dem ersten und dem zweiten Abschnitt (21", 21‴), d.h. an dem Scheitelpunkt des V, der Übertragungshebel (21) schwenkbar an einem zweiten Gelenk (23) befestigt wird, das an der Kippplatte (8) fixiert wird, wobei das distale Ende des zweiten Abschnitts (21‴) an der Sonikatorvorrichtung (4) mittels eines dritten Gelenks (24) befestigt wird, das an einer horizontalen Hochpräzisionsführung (26), beispielsweise einer Niedrigprofil-Kugelführung, eingebaut wird, und wobei das erste Gelenk (22) mit dem Linearaktuator (20) des Einstellungselements (6) mittels einer vertikalen Hochpräzisionsführung (25), beispielsweise einer Niedrigprofil-Kugelführung, verbunden ist.

2. System (1) nach Anspruch 1, wobei der Rahmen (2) eine Basis (2a) umfasst, von der sich ein Trennelement (2b), das auf einer Ebene liegt und die Basis (2a) in einen ersten Abschnitt (7a) und einen zweiten Abschnitt (7b) unterteilt, senkrecht erstreckt, wobei das Trennelement (2b) in einer Position, die proximal einem seiner oberen Enden ist, beweglich mindestens eine Kippplatte (8) trägt, die zwischen einer ersten Betriebsstellung, in der die Kippplatte (8) im Wesentlichen parallel zu der Ebene des Trennelements (2b) ist, und einer zweiten Betriebsstellung, in der die Kippplatte (8) distal aus der Ebene des Trennelements (2b) hervorsteht, beweglich ist, wobei die erste Betriebsstellung der Betriebsstellung zum Schweißen entspricht, während die zweite Betriebsstellung der Stellung zum Entfernen und/oder zum Ersetzen des zu schweißenden Materials in dem System (1) entspricht.

3. System (1) nach Anspruch 2, wobei eine Tragstruktur (10), die mindestens einen Linearaktuator (11) der Kippplatte (8) trägt, auf der Basis (2a) angeordnet ist, wobei der Linearaktuator (11) mittels eines Gelenks (11a) an der Tragstruktur (10) befestigt wird und mittels eines Gelenks (11b) an der Kippplatte (8) befestigt wird, um die Bewegung der letzteren zwischen der ersten und der zweiten Betriebsstellung oder umgekehrt zu erhalten.

4. System (1) nach Anspruch 3, wobei die Gelenke (11a, 11b) des Linearaktuators (11) der Kippplatte (8) in Positionen angeordnet sind, um der Achse (X-X) des Linearaktuators (11) zu ermöglichen, einen Winkel von etwa 45° in Bezug auf die Ebene des Trennelements (2b) zu bilden.

5. System (1) nach einem der Ansprüche 3 oder 4, wobei die Ultraschallschweißvorrichtung (3) an der Seite der Kippplatte (8) eingebaut wird, die der Seite gegenüberliegt, die das Gelenk (11b) des Linearaktuators (11) der Kippplatte (8) trägt.

6. System (1) nach einem der Ansprüche 3 bis 5, wobei die Tragstruktur (10) seitliche Verstärkungsflanken (12) umfasst, die durch ein Verbindungsband (13) verbunden sind, das als eine Befestigungsfläche für den Linearaktuator (11) der Kippplatte (8) mittels des Gelenks (11a) dient.

7. System (1) nach Anspruch 6, wobei die seitlichen Verstärkungsflanken (12) eine Lambda-Geometrie aufweisen, die einen oberen Abschnitt (12a) und einen unteren Abschnitt (12b) umfasst, die sich kreuzen, um einen Schnittpunktsabschnitt (12c) zu bilden, der einen oberen Schlitz (30a) und einen unteren Schlitz (30b) definiert, wobei sich der Schnittpunkt der Linien in dem Schnittpunktsabschnitt (12c) vorzugsweise etwa an derselben Höhe von der Basis (2a) wie der Schwerpunkt der Befestigung der Sonikatorvorrichtung (4) befindet.

8. System (1) nach einem der Ansprüche 1 bis 7, wobei die Sonikatorvorrichtung (4) eine piezoelektrische Vorrichtung (14) umfasst, die mit einem Sonotrode (15), vorzugsweise über einen Booster (14'), verbunden ist, wobei das Sonotrode (15) mit einem Arbeitsende (15a) endet, der dazu bestimmt ist, mit dem zu schweißenden Material in Kontakt zu kommen; und wobei das Amboss-Element (5) auf der Basis (2a) eingebaut wird und eine rotierende Walze (16) umfasst, die in diametral gegenüberliegenden Positionen zwei Kontrastrippen (16a) aufweist, die den Abstand (17) bilden, der den Sitz des Schweißen bildet, wenn sie abwechselnd vertikal mit dem Arbeitsende (15a) des Sonotrodes (15) ausgerichtet sind.

9. System (1) nach einem der Ansprüche 1 bis 8, wobei der Linearaktuator (20) des Einstellungselements (6) ein Voice-Coil-Aktuator ist, der auch als Sensor dient, der die Kraft erkennt, die auf das Einstellungselement (6) ausgeübt wird und sie an eine Steuer- und Kontrolleinheit sendet, die basierend auf dem Lesen der ausgeübten Kraft, den Strom einstellt, der dem Linearaktuator (20) zugeführt wird, um die Bewegung des Sonikators (15) einzustellen und den Abstand (17) konstant zu halten.

10. System (1) nach einem der Ansprüche 1 bis 9, wobei die Arme des Übertragungshebels (21) und der Winkel zwischen dem ersten Abschnitt (21") und dem zweiten Abschnitt (21‴) dimensioniert sind, sodass das Einstellungselement (6) eine Reduzierung von 10 bis 1 der Bewegung des Linearaktuators (20) entlang der Achse (Y-Y) in die Bewegung der Sonikatorvorrichtung (4) entlang der Achse (Y'-Y') ausführt

11. System (1) nach einem der Ansprüche 1 bis 10, wobei das erste, das zweite und das dritte Gelenk (22, 23, 24) Kegelrollenlager (27) umfassen.

## Revendications

1. Système de soudage par sonication (1) comprenant un bâti (2) auquel est monté de manière mobile au moins un dispositif de soudage par sonication (3), ledit dispositif de soudage par sonication (3) comprenant un dispositif sonicateur (4), comprenant un sonotrode (15), un élément enclume (5) et un organe (6) de réglage de l'espacement (17) entre ledit dispositif sonicateur (4) et ledit élément enclume (5), ledit organe de réglage (6) comprenant un actionneur linéaire (20) couplé fonctionnellement au dispositif sonicateur (4) au moyen d'un levier de transmission, **caractérisé en ce que** le dispositif sonicateur (4) est monté de manière coulissante sur un guide vertical (28) au moyen d'une glissière (28'), par exemple un guide à galets linéaire, et est couplé fonctionnellement à l'organe de réglage (6) de façon à être apte à régler l'espacement (17) entre ledit dispositif sonicateur (4) et ledit élément enclume (5), l'organe de réglage (6) comprenant un actionneur linéaire (20) et un levier de transmission (21) qui transforme le mouvement de l'actionneur linéaire (20) le long d'un axe longitudinal (Y-Y) de l'actionneur linéaire (20) en un mouvement du dispositif sonicateur (4) le long d'un axe (Y'-Y') perpendiculaire audit axe longitudinal (Y-Y), le levier de transmission (21) comprenant une portion de liaison (21') avec une première charnière (22) et une portion en forme de V dans laquelle la première section (21"), proximale à la portion de liaison (21'), est plus longue que la deuxième section (21"'), au niveau du point de connexion entre la première et la deuxième section (21", 21‴), c'est-à-dire au sommet du V, le levier de transmission (21) étant articulé sur une deuxième charnière (23) fixée à la plaque basculante (8), l'extrémité distale de la deuxième section (21‴) étant articulée sur le dispositif sonicateur (4) au moyen d'une troisième charnière (24) montée sur un guide horizontal de haute précision (26), par exemple un guide à billes à profil bas, et la première charnière (22) étant connectée à l'actionneur linéaire (20) de l'organe de réglage (6) au moyen d'un guide vertical de haute précision (25), par exemple un guide à billes à profil bas.

2. Le système (1) selon la revendication 1, dans lequel le bâti (2) comprend une base (2a) à partir de laquelle s'étend perpendiculairement un élément de séparation (2b), reposant sur un plan et divisant la base (2a) en une première portion (7a) et une deuxième portion (7b), ledit élément de séparation (2b) supportant de manière mobile, en position proximale à l'une de ses extrémités supérieures, au moins une plaque basculante (8) mobile entre une première position de fonctionnement, dans laquelle la plaque basculante (8) est sensiblement parallèle au plan de l'élément de séparation (2b), et une deuxième position de fonctionnement, dans laquelle la plaque basculante (8) dépasse distalement du plan de l'élément de séparation (2b), la première position de fonctionnement correspondant à la position de fonctionnement pour le soudage, tandis que la deuxième position de fonctionnement correspond à la position de retrait et/ou de remplacement du matériau à souder dans le système (1).

3. Le système (1) selon la revendication 2, dans lequel une structure de support (10) supportant au moins un actionneur linéaire (11) de la plaque basculante (8) est disposée sur la base (2a), l'actionneur linéaire (11) étant articulé, au moyen d'une charnière (11a), sur la structure de support (10) et, au moyen d'une charnière (11b), sur la plaque basculante (8) de façon à permettre le déplacement de cette dernière entre ladite première et ladite deuxième position de fonctionnement, ou inversement.

4. Le système (1) selon la revendication 3, dans lequel les charnières (11a, 11b) de l'actionneur linéaire (11) de la plaque basculante (8) sont placées à des positions permettant à l'axe (X-X) de l'actionneur linéaire (11) de former un angle d'environ 45° par rapport au plan de l'élément de séparation (2b).

5. Le système (1) selon l'une quelconque des revendications 3 ou 4, dans lequel le dispositif de soudage par sonication (3) est monté sur la face de la plaque basculante (8) opposée à celle supportant ladite charnière (11b) de l'actionneur linéaire (11) de la plaque basculante (8).

6. Le système (1) selon l'une quelconque des revendications 3 à 5, dans lequel la structure de support (10) comprend des flancs latéraux de renforcement (12) réunis par une bande de liaison (13) servant de surface de fixation pour l'actionneur linéaire (11) de la plaque basculante (8) au moyen de la charnière (11a).

7. Le système (1) selon la revendication 6, dans lequel les flancs latéraux de renforcement (12) présentent une géométrie en lambda, comprenant une portion supérieure (12a) et une portion inférieure (12b) se croisant pour former une portion d'intersection (12c) qui définit une fente supérieure (30a) et une fente inférieure (30b), l'intersection des lignes au niveau de la portion d'intersection (12c) étant de préférence située approximativement à la même hauteur depuis la base (2a) que le centre de gravité de la contrainte du dispositif sonicateur (4).

8. Le système (1) selon l'une quelconque des revendications 1 à 7, dans lequel le dispositif sonicateur (4) comprend un dispositif piézoélectrique (14) connecté à un sonotrode (15), de préférence au moyen d'un booster (14'), ledit sonotrode (15) se terminant par une extrémité d'opération (15a) destinée à entrer en contact avec le matériau à souder ; et dans lequel l'élément enclume (5) est monté sur la base (2a) et comprend un rouleau rotatif (16) comprenant, en des positions diamétralement opposées, deux nervures de contraste (16a) qui créent l'espacement (17) formant le siège du soudage lorsqu'elles sont alignées alternativement de manière verticale avec l'extrémité d'opération (15a) du sonotrode (15).

9. Le système (1) selon l'une quelconque des revendications 1 à 8, dans lequel l'actionneur linéaire (20) de l'organe de réglage (6) est un actionneur à bobine mobile, agissant également comme capteur détectant la force appliquée à l'organe de réglage (6) et l'envoyant à une unité de commande et de contrôle qui, en fonction de la lecture de la force appliquée, règle le courant fourni à l'actionneur linéaire (20) de façon à régler le mouvement du sonicateur (15) et à maintenir constant l'espacement (17).

10. Le système (1) selon l'une quelconque des revendications 1 à 9, dans lequel les bras du levier de transmission (21) et l'angle entre la première section (21") et la deuxième section (21‴) sont dimensionnés de sorte que l'organe de réglage (6) effectue une réduction de 10 pour 1 du mouvement de l'actionneur linéaire (20) le long de l'axe (Y-Y) dans le mouvement du dispositif sonicateur (4) le long de l'axe (Y'-Y').

11. Le système (1) selon l'une quelconque des revendications 1 à 10, dans lequel les première, deuxième et troisième charnières (22, 23, 24) comprennent des roulements coniques (27).
